# EUROPÄISCHE PATENTSCHRIFT

(11) **EP 0 649 023 B1**
(45) Veröffentlichungstag und Bekanntmachung des Hinweises auf die Patenterteilung: **12.05.1999**
(21) Anmeldenummer: 93118650.6
(22) Anmeldetag: 19.11.1993
(51) Int. Cl.: G01P 15/135

(54) **Beschleunigungssensor**
Accelerometer
Accéléromètre

(30) Priorität: 15.10.1993 DE 4335250
(43) Veröffentlichungstag der Anmeldung: 19.04.1995
(73) Patentinhaber: TRW Occupant Restraint Systems GmbH & Co. KG, 73551 Alfdorf (DE)
(72) Erfinder: Maiwald, Helmut, D-73553 Alfdorf (DE); Böhmler, Klaus, D-73525 Schwäbisch-Gmünd (DE)
(74) Vertreter: Degwert, Hartmut, Dipl.-Phys.

(56) Entgegenhaltungen:
- EP-A- 0 466 021
- FR-A- 2 377 638
- GB-A- 2 236 621
- US-A- 5 012 050
- US-A- 5 217 252

## Beschreibung

Die Erfindung betrifft einen Beschleunigungssensor zur Auslösung eines Insas-Insassen-Rückhaltesystems in Fahrzeugen, mit einem translatorisch in einem Gehäuse verschiebbar geführten Sensorkörper, der durch eine Rückstellfeder in eine Ruhelage vorgespannt und durch seine Massenträgheit entgegen der Kraft der Rückstellfeder in eine Auslösestellung bewegbar ist.

Zur Auslösung von Insassen-Rückhaltesystemen in Fahrzeugen, beispielsweise Gurtstraffer oder aufblasbare Schutzkissen, sind elektronische, elektromechanische und mechanische Beschleunigungssensoren bekannt. Elektronische Sensoren sind mit komplexen Verarbeitungsschaltungen ausgestattet, die das Signal eines Beschleunigungsaufnehmers verarbeiten und einen elektrischen Auslöseimpuls liefern, wenn das über die Zeit integrierte Beschleunigungssignal einen vorbestimmten Schwellwert überschreitet. Ein solcher elektronischer Beschleunigungssensor zeichnet sich durch hohe Reproduzierbarkeit des Auslöseverhaltens und ein hohes Maß an Sicherheit vor Fehlauslösung durch am Fahrzeug auftretende Stöße aus. Er läßt sich jedoch nur mit hohem technischen Aufwand realisieren.

Um auch mit mechanischen Beschleunigungssensoren eine ausreichende Sicherheit gegen Fehlauslösung zu erzielen, muß der verwendete Sensorkörper bis zur Auslösung einen gewissen Betätigungshub entgegen der Wirkung einer Rückstellfeder durchlaufen, wodurch das integrierende Verhalten einer elektronischen Verarbeitungsschaltung simuliert werden kann. Um eine gute Reproduzierbarkeit des Auslöseverhaltens zu gewährleisten, muß dieser Betätigungshub mindestens einige Millimeter betragen. Der Sensorkörper wird durch die Rückstellfeder unter einer solchen Vorspannung in seine Ruhestellung belastet, daß er sich erst bei Beschleunigungswerten in Bewegung setzt, die kaum niedriger sind als der mittlere Beschleunigungswert, bei dem die Auslösung erfolgen soll, sofern die Beschleunigung andauert. Bei einem Gurtstraffer oder Gassacksystem beträgt dieser mittlere Beschleunigungswert etwa 12 g. Da aber die Zeitspanne bis zur Auslösung direkt der Wegstrecke des Sensorkörpers proportional ist (nach dem bekannten Gesetz: s = 1/2b·t²) und zur Erzielung einer ausreichenden Reproduzierbarkeit eine relativ große Wegstrecke benötigt wird, kann mit herkömmlichen elektromechanischen Beschleunigungssensoren eine kurze Ansprechzeit nicht erreicht werden.

In der FR-A-2 377 638 ist bereits ein Beschleunigungssensor beschrieben, der sich durch eine merklich verkürzte Ansprechzeit auszeichnet, da der Sensorkörper unmittelbar vor Erreichen seiner Auslösestellung durch eine zusätzliche Feder in Richtung seiner Ruhelage beaufschlagt ist. Der weitaus größte Teil des Betätigungshubes des Sensorkörpers wird entgegen der Kraft der Rückstellfeder allein durchlaufen. Der Sensorkörper spricht daher bereits auf niedrige Beschleunigungen an und erreicht bei andauernder Beschleunigung den Beginn des eigentlichen Betätigungshubes mit einer Geschwindigkeit, die sich aus dem Produkt der wirksamen Beschleunigung und der für die zurückgelegte Wegstrecke benötigten Zeit errechnen läßt. Der weiteren Bewegung des Sensorkörpers setzt sich nun auch die Kraft der zusätzlichen Feder entgegen. Die kombinierte Federkraft beider Federn wird nur überwunden, wenn der Sensorkörper einen ausreichenden Impuls aufweist und/oder aufgrund der andauernden Beschleunigung eine ausreichend hohe Trägheitskraft auftritt. Ist diese Bedingung nicht erfüllt, so erfolgt keine Auslösung, und der Sensorkörper wird bei nachlassender Beschleunigung in seine Ruhelage zurückgeführt.

Bei diesem Beschleunigungssensor kann die Bewegungsstrecke des Sensorkörpers aus der Ruhelage bis in die Auslösestellung ausreichend groß dimensioniert werden, damit Fehlauslösungen durch Stöße vermieden werden. Da aber der Sensorkörper bereits bei relativ niedrigen Beschleunigungswerten aus seiner Ruhelage heraus in Richtung der Auslösestellung bewegt wird, ist die Zeitspanne zwischen dem Auftreten hoher, zur Auslösung führender Beschleunigungswerte und dem Erreichen der Auslösestellung merklich kürzer als bei herkömmlichen Beschleunigungssensoren.

Die Erfindung geht aus von einem Beschleunigungssensor, wie er in der FR-A-2377638 beschrieben ist. Angestrebt wird, unter Beibehaltung der oben beschriebenen Auslösecharakteristik, eine zuverlässige Auslösung eines Schlagzünders.

Der erfindungsgemäße Beschleunigungssensor zur Auslösung eines Insassen-Rückhaltesystems in Fahrzeugen umfaßt einen translatorisch in einem Gehäuse verschiebbar geführten Sensorkörper, der durch eine Rückstellfeder in eine Ruhelage vorgespannt und durch seine Massenträgheit entgegen der Kraft der Rückstellfeder in eine Auslösestellung bewegbar ist, wobei der Sensorkörper unmittelbar vor Erreichen der Auslösestellung mittels einer zusätzlichen Feder in Richtung seiner Ruhelage beaufschlagt ist. Der erfindungsgemäße Beschleunigungssensor ist dadurch gekennzeichnet, daß durch den Sensorkörper ein durch die zusätzliche Feder belasteter Schlagbolzen aus einer gesicherten Stellung in eine Freigabestellung bewegbar ist, in der er senkrecht zur Bewegungsrichtung des Sensorkörpers beweglich ist.

Vorteilhafte Weiterbildungen der Erfindung sind in den abhängigen Ansprüchen angegeben.

Eine Ausführungsform der Erfindung wird nun unter Bezugnahme auf die Zeichnung näher beschrieben. In der Zeichnung zeigen:
Fig. 1 einen schematischen Längsschnitt eines Beschleunigungssensors, der nicht Gegenstand der Erfindung ist, jedoch zur Erläuterung der gewünschten Auslösecharakteristik dient;
Fig. 2a, 2b und 2c drei Diagramme, in denen die wirksamen Federkräfte in Abhängigkeit von der Bewegungsstrecke des Sensorkörpers aufgetragen sind;
Fig. 3 einen schematischen Längsschnitt eines weiteren Beschleunigungssensors, der nicht Gegenstand der Erfindung ist, jedoch zur Erläuterung der Erfindung zweckdienlich ist; und
Fig. 4 einen schematischen Längsschnitt einer Ausführungsform des erfindungsgemäßen Beschleunigungssensors.

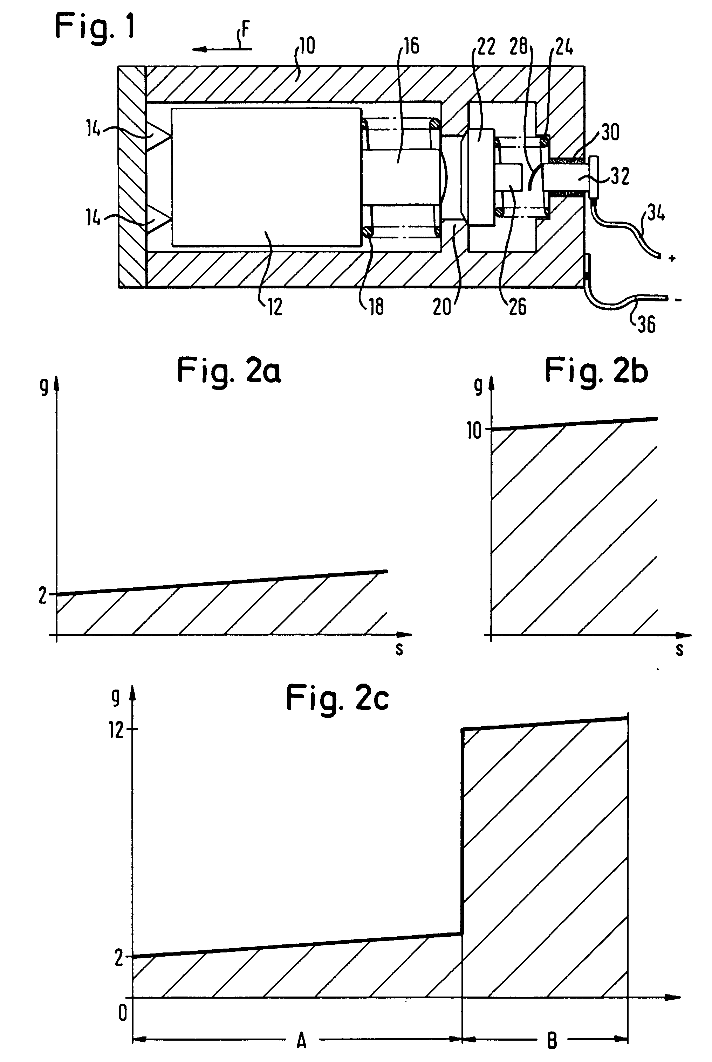

Bei Fig. 1 ist in einem quaderformigen Gehäuse 10 ein gleichfalls quaderförmiger oder auch zylindrischer Sensorkörper 12 translatorisch verschiebbar angeordnet. Der Sensorkörper 12 ist an seiner einem Ende des Gehäuses 10 zugewandten Stirnfläche auf Anschlägen 14 des Gehäuses abgestützt. An der gegenüberliegenden Stirnfläche des Sensorkörpers 12 ist ein Betätigungsstößel 16 angesetzt. Auf dieser Stirnfläche ist ferner eine Rückstellfeder 18 abgestützt, die am gegenüberliegenden Ende auf einer ringförmigen, in das Innere des Gehäuses 10 ragenden Stützwand 20 abgestützt ist. Die schraubenförmige, als Druckfeder wirkende Rückstellfeder 18 beaufschlagt den Sensorkörper mit einer vorbestimmten Vorspannung in seine Ruhestellung in Anlage an den Anschlägen 14. Auf ihrer von dem Sensorkörper 12 abgewandten Seite bildet die Stützwand 20 einen Anschlag für einen allgemein scheibenförmigen Übertragungskörper 22, der durch eine Druckfeder 24 gegen die Stützwand gedrückt wird. Diese zusätzliche Druckfeder 24 ist gleichfalls als Schraubenfeder ausgebildet und stützt sich zwischen dem Übertragungskörper 22 und der diesem gegenüberliegenden Innenfläche des Gehäuses 10 ab. Der Übertragungskörper 22 trägt einen Kontaktstift 26, der bei der in Fig. 1 gezeigten Ruhestellung dem freien Ende eines Federkontakts 28 in einem Abstand von etwa 0,5 mm gegenüberliegt. Der Federkontakt 28 ist unter Zwischenfügung einer Isolierung 30 durch eine Bohrung in der Wandung des Gehäuses 10 eingesetzt und mit einem Stift 32 befestigt, an dem auch ein Anschlußdraht 34 befestigt ist. Ein weiterer Anschlußdraht 36 ist am Gehäuse 10 befestigt, das aus einem elektrisch gut leitenden Werkstoff besteht.

Die Rückstellfeder 18 ist so dimensioniert und steht unter einer solchen Vorspannung, daß der Sensorkörper 12 sich unter der Wirkung einer Beschleunigung des Gehäuses 10 in der in Fig. 1 mit einem Pfeil F bezeichneten Richtung von den Anschlägen 14 entgegen der Kraft der Rückstellfeder 18 fortbewegt, sobald die Beschleunigung einen Wert von etwa 2 g überschreitet. Bei anhaltender Beschleunigung vollführt der Sensorkörper 12 einen Anfangshub, bis das freie Ende des Betätigungsstößels 16 auf den Übertragungskörper 22 trifft. Die Größe dieses Anfangshubes beträgt etwa 2 mm, kann aber je nach Ausführungsform im Bereich von etwa 1 bis 3 mm liegen. Auch können die Anschläge 14 verstellbar ausgebildet werden, so daß eine Justierung möglich ist. Während dieses Anfangshubes ergibt sich der im Diagramm der Fig. 2a gezeigte Zusammenhang zwischen der auftretenden Beschleunigung und der zurückgelegten Wegstrecke. Während der translatorischen Verlagerung des Sensorkörpers 12 bis zum Anstoßen des freien Endes des Betätigungsstößels 16 an dem Übertragungskörper 22 ist nur die Rückstellfeder 18 wirksam.

Das Diagramm in Fig. 2b zeigt die Beziehung zwischen der auftretenden Beschleunigung und der Wegstrecke, wenn allein die zusätzliche Druckfeder 24 wirksam ist. Die Druckfeder 24 steht unter einer etwa fünffach höheren Vorspannung als die Rückstellfeder 18, so daß erst bei einer Beschleunigung von mehr als 10 g eine Verlagerung eintritt.

Tatsächlich aber sind bei der Bewegung des Sensorkörpers 12 über den Punkt der Berührung mit dem Übertragungskörper 22 hinaus beide Federn wirksam, da die Rückstellfeder 18 und die Druckfeder 24 nunmehr funktionell parallelgeschaltet sind. Die Wirkung der Rückstellfeder 18 in Kombination mit der zusätzlichen Druckfeder 24 ist in dem Diagramm der Fig. 2c, veranschaulicht. Über den mit A bezeichneten Anfangshub ist nur die Rückstellfeder 18 wirksam; auf dem anschließenden Betätigungshub B sind beide Federn wirksam. Die Verlagerung des Übertragungskörpers 22 tritt also erst ein, wenn eine Beschleunigung von 12 g überschritten wird. Wenn die hohe Beschleunigung andauert, trifft die Stirnfläche des Kontaktstiftes 26 schließlich auf das freie Ende der Kontaktfeder 28 am Ende des Betätigungshubes B, wodurch ein Auslösesignal für einen elektrischen Zünder an einem pyrotechnischen Gasgenerator oder dergleichen erzeugt wird. Wenn die Beschleunigung nicht andauert oder geringer wird, erreicht der Übertragungskörper 22 nicht diese Auslösestellung, sondern kehrt in seine Ausgangsstellung an der Stützwand 20 zurück. Bei weiter absinkender Beschleunigung kehrt auch die Sensormasse 12 in ihre Ruhestellung zurück.

Das Gehäuse 10 des Beschleunigungssensors wird am Aufbau eines Fahrzeugs befestigt. Beim Aufprall des Fahrzeugs auf einem Hindernis entstehen stark schwankende Verzögerungen und Beschleunigungen in Längsrichtung des Beschleunigungssensors. Die federbelastete Sensormasse 12 verhält sich wie ein integrierendes Glied, so daß der Auslösevorgang prinzipiell durch das Diagramm nach Fig. 2c veranschaulicht werden kann.

Bei dem beschriebenen Beschleunigungssensor ist das Auslösekriterium nicht die Überschreitung eines bestimmten mittleren Beschleunigungswertes, sondern die Geschwindigkeit des Sensorkörpers zu Beginn des Betätigungshubes B. Ist diese Geschwindigkeit ausreichend groß, kommt es zu einer Kontaktgabe. Andernfalls kehrt bei zurückgehender Beschleunigung der Sensorkörper 12 in seine Ruhelage zurück.

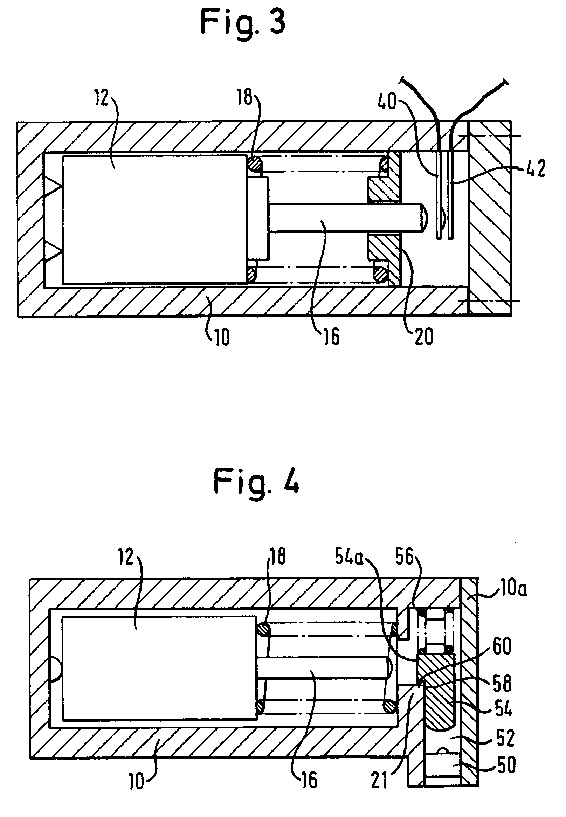

Der in Fig. 3 gezeigte Beschleunigungssensor unterscheidet sich von dem nach Fig. 1 dadurch, daß der Übertragungskörper entfällt und die zusätzliche Feder durch einen Federkontakt 40 gebildet ist, der am Gehäuse 10 eingespannt ist und in dessen Innenraum ragt. Die Kontaktfeder 40 bildet den beweglichen Kontakt eines Kontaktpaares, dessen fester Kontakt 42 ebenfalls am Gehäuse 10 eingespannt ist und in dessen Innenraum ragt. Der Abstand zwischen diesen Kontakten beträgt etwa 0,5 mm und kann im Bereich von etwa 0,3 bis 0,8 mm liegen. Das freie Ende des Betätigungsstößels 16 der Sensormasse 12 liegt in der Ruhestellung desselben in einem Abstand von etwa 2 mm von der gegenüberliegenden Fläche der Kontaktfeder 40. Die Kontaktfeder 40 besitzt im Vergleich zur Rückstellfeder 18 eine große Federhärte, so daß sich auch bei dieser Ausführung die in Fig. 2c veranschaulichte Abhängigkeit der zurückgelegten Wegstrecke von der auftretenden Beschleunigung zeigt. Der Betätigungshub B beginnt, sobald das freie Ende des Betätigungsstößels 16 mit der Kontaktfeder 40 in Berührung gelangt ist, und ist vollendet, sobald die Kontaktfeder 40 mit dem feststehenden Kontakt 42 in Berührung gelangt ist.

Bei beiden Ausführungen wird durch die Nachgiebigkeit der Kontaktfeder ein Kontaktprellen verhindert.

Bei der in Fig. 4 gezeigten erfindungsgemäßen Ausführungsform stimmen die Anordnung und Ausbildung der Sensormasse 12 mit ihrem Betätigungsstößel 16 weitgehend mit der Ausführungsform nach Fig. 3 überein, so daß keine erneute Beschreibung erfolgt. Diese Ausführungsform ist jedoch zur Auslösung eines pyrotechnischen Gasgenerators mit Schlagzünder bestimmt. Der in Fig. 4 nur schematisch dargestellte, mit 50 bezeichnete Schlagzünder sitzt am Ende einer Bohrung 52 des Gehäuses 10, die senkrecht zur Achse des Sensorkörpers 12 ausgerichtet ist. Die Bohrung 52 liegt zwischen der von dem Sensorkörper 12 abgewandten Stirnwand 10a des Gehäuses 10 und einer Zwischenwand 21 des Gehäuses, die gegenüber dem freien Ende des Betätigungsstößels 16 geöffnet ist. In der Bohrung 52 ist ein Schlagbolzen 54 mit Spiel zur Innenseite der Stirnwand 10a aufgenommen. Zwischen der Bodenwand der Bohrung 52 und der dieser gegenüberliegenden Stirnfläche des Schlagbolzens 54 ist eine gespannte Druckfeder 56 abgestützt. Das gegenüberliegende freie Ende des Schlagbolzens 54 wird in einem Abstand von beispielsweise etwa 10 mm von dem Schlagzünder 50 gehalten.

Der Schlagbolzen 54 ist ferner mit einem seitlichen Absatz 54a versehen, der dem freien Ende des Betätigungsstößels 16 gegenüberliegt und an dem eine Rampenfläche 58 gebildet ist. Mit dieser Rampenfläche 58 stützt sich der Schlagbolzen 54 bei der in Fig. 4 gezeigten gesicherten Stellung auf einer entsprechenden Stützfläche 60 an der Innenkante der Zwischenwand 21 ab. Die Rampenfläche 58 und die Stützfläche 60 sind unter einem solchen Winkel zur Achse des Sensorkörpers 12 geneigt, daß der Schlagbolzen 54 durch die axiale, zum Sensorkörper 12 hin gerichtete Komponente der von der Druckfeder 56 erzeugten Kraft in Anlage an der benachbarten Fläche der Zwischenwand 21 gehalten wird. Die axiale Ausdehnung der Rampenfläche 58 ist etwas kleiner als der Abstand zwischen dem Schlagbolzen 54 und der Innenseite der Stirnwand 10a, so daß der Schlagbolzen 54, wenn er über den Rand der Stützfläche 60 hinaus in Richtung der Stirnwand 10a verlagert wird, von dieser Stützfläche 60 freikommt und dann durch die Druckfeder 56 in Richtung des Schlagzünders 50 beschleunigt wird.

Wenn sich der Sensorkörper 12 bei einer Verzögerung des Fahrzeugs unter der Wirkung seiner Trägheitskraft in Richtung des Schlagbolzens 54 verlagert, ist zunächst nur die Rückstellfeder 18 wirksam. Sobald das freie Ende des Betätigungsstößels 16 auf dem seitlichen Ansatz 54a des Schlagbolzens 54 auftrifft, muß zur Weiterbewegung des Sensorkörpers 12 zusätzlich zur Kraft der Feder 18 die axiale Kraftkomponente überwunden werden, die durch die Druckfeder 56 unter der Wirkung der sich auf der Stützfläche 60 abstützenden Rampenfläche 58 erzeugt wird. Die Druckfeder 56 ist gegenüber der Rückstellfeder 18 hart dimensioniert, so daß die Summe der wirksamen Kräfte dem Diagramm in Fig. 2c entspricht. Auch bei dieser Ausführungsform erfolgt keine Auslösung, wenn der Impuls des Sensorkörpers 12 keinen ausreichend großen Wert besitzt. Der Schlagbolzen 54 kehrt dann in seine gesicherte Stellung in Anlage an der Seitenfläche der Zwischenwand 21 zurück.

Bei dieser Ausführungsform stehen mehrere Parameter zur Verfügung, um die Auslösecharakteristik zu beeinflussen, insbesondere die Bemessung der Rückstellfeder 18, die Härte der Druckfeder 56 und die axiale Erstreckung der Rampenfläche 58.

Mit dem erfindungsgemäßen Beschleunigungssensor werden im Vergleich zu herkömmlichen Ausführungen überraschend kurze Auslösezeiten erzielt, die mit denen von elektronischen Auslösesystemen vergleichbar sind. Da die Sensormasse nur auf Beschleunigungen in einer Richtung, der Längsrichtung des Gehäuses 10, anspricht, ist keinerlei Sensitivität gegenüber Querbeschleunigungen vorhanden.

## Patentansprüche

1. Beschleunigungssensor zur Auslösung eines Insassen-Rückhaltesystems in Fahrzeugen, mit einem translatorisch in einem Gehäuse (10) verschiebbar geführten Sensorkörper (12), der durch eine Rückstellfeder (18) in eine Ruhelage vorgespannt und durch seine Massenträgheit entgegen der Kraft der Rückstellfeder (18) in eine Auslösestellung bewegbar ist, wobei der Sensorkörper (12) unmittelbar vor Erreichen der Auslösestellung mittels einer zusätzliche Feder (56) in Richtung seiner Ruhelage beaufschlagt ist, dadurch gekennzeichnet, daß durch den Sensorkörper (12) ein durch die zusätzliche Feder (56) belasteter Schlagbolzen (54) des Beschleunigungssensors aus einer gesicherten Stellung in eine Freigabestellung bewegbar ist, in der er senkrecht zur Bewegungsrichtung des Sensorkörpers beweglich ist.

2. Sensor nach Anspruch 1, dadurch gekennzeichnet, daß der Schlagbolzen (54) mit einer an einem seitlichen Ansatz (54) gebildeten Rampenfläche (58) auf einer entsprechenden Stützfläche (60) am Gehäuse (10) in seiner gesicherten Stellung abgestützt ist.

3. Sensor nach einem der vorstehenden Ansprüche, dadurch gekennzeichnet, daß der Sensorkörper (12) ausgehend von seiner Ruhelage bis zum Wirksamwerden der zusätzlichen Feder (56) einen Anfangsschub von etwa 2 ± 1 mm und anschließend bis zum Erreichen der Auslösestellung einen Betätigungshub von etwa 0,3 bis 0,8 mm durchläuft.

4. Sensor nach einem der vorstehenden Ansprüche, dadurch gekennzeichnet, daß die Federkraft der Rückstellfeder (18) in der Ruhelage des Sensorkörpers (12) durch die an ihm unter der Wirkung einer Beschleunigung von etwa 2g auftretende Trägheitskraft überwindbar ist.

5. Sensor nach einem der vorstehenden Ansprüche, dadurch gekennzeichnet, daß die kombinierte Federkraft der Rückstellfeder (18) und der zusätzlichen Feder (56) durch die an dem Sensorkörper (12) unter der Wirkung einer Bechleunigung von etwa 12g auftretenden Trägheitskraft überwindbar ist.

6. Sensor nach einem der vorstehenden Ansprüche, dadurch gekennzeichnet, daß der Sensorkörper (12) auf seiner der Auslösestellung zugewandten Seite einen Betätigungsstößel (16) aufweist.

## Claims

1. An acceleration sensor for activating a vehicular passenger restraining system, having a sensor body (12) which is slidably guided translatorically in a housing (10) and preloaded to a rest position by a return spring (18) and movable against the force of the return spring (18) into an actuating position due to its mass inertia, wherein immediately prior to reaching the actuating position the sensor body (12) is subjected to the force of an additional spring (56) in the direction of its rest position, characterized in that a firing pin (54) of the acceleration sensor loaded by the additional spring (56) can be moved out of a secured position into a release position by the sensor body (12), in which it is perpendicularly movable with respect to the direction of movement of the sensor body.

2. A sensor according to claim 1, characterized in that the firing pin (54) is in its secured position supported, with a ramp face (58) formed at a lateral projection (54), at a corresponding support face (60) at the housing (10).

3. A sensor according to any one of the preceding claims, characterized in that from its rest position up to the additional spring (56) becoming effective the sensor body (12) executes an initial stroke of approx. 2 ± 1 mm followed by an actuating stroke of roughly 0.3 to 0.8 mm up to reaching the actuating position.

4. A sensor according to any one of the preceding claims, characterized in that the spring force of the return spring (18) in the rest position of the sensor body (12) can be overcome by the inertial force occurring at the sensor body under the effect of an acceleration of approx. 2 g.

5. A sensor according to any one of the preceding claims, characterized in that the combined spring force of the return spring (18) and of the additional spring (56) can be overcome by the inertial force occurring at the sensor body (12) under the effect of an acceleration of approx. 12 g.

6. A sensor according to any one of the preceding claims, characterized in that the sensor body (12) has an actuating pin (16) on its side facing the actuating position.

## Revendications

1. Détecteur d'accélération pour déclencher un système de retenue de passagers dans un véhicule, avec un corps de détecteur (12) qui est guidé de façon à pouvoir coulisser par un mouvement de translation dans un boîtier (10), corps de détecteur qui est précontraint par un ressort de rappel (18) en position de repos et que l'on peut déplacer du fait de son inertie à l'encontre de la force du ressort de rappel (18) pour l'amener dans une position de déclenchement, le corps du détecteur (12) étant sollicité, en direction de sa position de repos, au moyen d'un ressort additionnel (56) immédiatement avant d'atteindre sa position de déclenchement, caractérisé en ce que par le corps de détecteur (12) un percuteur (54) du détecteur d'accélération, comprimé par le ressort additionnel (56), peut être déplacé d'une position de verrouillage à une position de libération, dans laquelle il est mobile perpendiculairement au sens de déplacement du corps du détecteur.

2. Détecteur selon la revendication 1, caractérisé en ce que le percuteur (54) prend appui par une surface en forme de rampe (58), formée sur un appendice latéral (54a), sur une surface d'appui correspondante (60) du boîtier (10) dans sa position de verrouillage.

3. Détecteur selon l'une des revendications précédentes, caractérisé en ce que le corps du détecteur (12) effectue une course initiale, en partant de sa position de repos jusqu'au moment où le ressort additionnel (56) devient opérationnel, d'environ 2 ± 1 mm et ensuite une course d'actionnement d'environ 0,3 à 0,8mm jusqu'à ce qu'il ait atteint la position de déclenchement.

4. Détecteur selon l'une des revendications précédentes, caractérisé en ce que la force du ressort de rappel (18), quand le corps du détecteur (12) est dans sa position de repos, peut être surmontée par la force d'inertie qu'il subit sous l'effet d'une accélération d'environ 2g.

5. Détecteur selon l'une des revendications précédentes, caractérisé en ce que la force combinée du ressort de rappel (18) et du ressort additionnel (56) peut être surmontée par la force d'inertie que subit le corps du détecteur (12) sous l'effet d'une accélération d'environ 12g.

6. Détecteur selon l'une des revendications précédentes, caractérisé en ce que le corps du détecteur (12) présente, sur son côté tourné vers la position de déclenchement, un poussoir d'actionnement (16).
